## Europäisches Patentamt

## European Patent Office

## Office européen des brevets

(11) Veröffentlichungsnummer : **0 025 994**
**B1**

(12) **EUROPÄISCHE PATENTSCHRIFT**

(45) Veröffentlichungstag der Patentschrift :
01.06.83

(51) Int. Cl.³ : **C 03 C 17/32, C 08 G 18/66,
C 08 G 18/38, C 08 G 18/73,
C 08 G 18/75**

(21) Anmeldenummer : **80105640.9**

(22) Anmeldetag : **19.09.80**

(54) **Verfahren zum Beschichten von Glasoberflächen.**

(30) Priorität : **21.09.79 DE 2938229**

(43) Veröffentlichungstag der Anmeldung :
**01.04.81 Patentblatt 81/13**

(45) Bekanntmachung des Hinweises auf die Patenterteilung : **01.06.83 Patentblatt 83/22**

(84) Benannte Vertragsstaaten :
**BE CH DE FR GB IT LI LU NL SE**

(56) Entgegenhaltungen :
**EP A 0 000 420
EP A 0 001 657
FR A 2 176 133
FR A 2 373 494**

(73) Patentinhaber : **CHEMISCHE WERKE HÜLS AG
Postfach 1320
D-4370 Marl 1 (DE)**

(72) Erfinder : **Gras, Rainer, Dr.
An der Ziegelei 91
D-4690 Herne 2 (DE)**

(74) Vertreter : **Steil, Hanna, Dipl.-Chem.
RSP PATENTE - PB 15 Postfach 1320
D-4370 Marl 1 (DE)**

Verfahren zum Beschichten von Glasoberflächen

Beschreibung und Beispiele

Gegenstand der Erfindung ist ein spezielles Verfahren zur Herstellung von transparenten, festhaftenden, einheitlichen, duroplastischen Überzügen für Glasflaschen auf Basis von lösungsmittelfreien PUR-Quasi-Einkomponentensystemen unter Verwendung von Lactonpolyesterpolyolen-Polyol-Gemischen und 2,4,6-Triamino-1,3,5-triazin. Mit Hilfe dieser PUR-Überzüge werden den kohlensäurehaltigen Getränkeflaschen, wie Bier, Coca-Cola®, Mineralwasser, Fruchtsaftgetränken usw. eine außerordentliche Stabilität verliehen und bei Mehrwegflaschen die Gebrauchsdauer verlängert. Infolge Schlag und Stoßeinwirkung, aber auch durch Erhitzen im Sonnenlicht oder an Wärmequellen, ist es nämlich in der Vergangenheit häufig zum Bersten ungeschützter Flaschen gekommen, die verschiedentlich schwere körperliche Verletzungen, insbesondere Augenverletzungen, bei Menschen hervorgerufen haben.

Einige der bekannten Beschichtungen für diesen Zweck besitzen den Nachteil, daß sich die Überzugsschicht bei wiederholter Reinigung eintrübt, was bei thermoplastischen Materialien möglicherweise auf einen Nachkristallisationseffekt des Kunststoffs zurückzuführen ist. Derartige Flaschen vermitteln einen negativen optischen Eindruck und sind daher verkaufspsychologisch unerwünscht. Der Nachteil von duroplastischen äthergruppenenthaltenden Kunststoffüberzügen liegt zum einen darin begründet, daß die PUR-Überzüge auf Polyätherpolyolbasis eine ziemlich schlechte Einreißfestigkeit aufweisen und zum anderen eine starke oxidative Anfälligkeit zeigen, was zum Verspröden der Schutzschicht führt und somit, insbesondere bei Mehrwegflaschen, dann der Splitterschutz nicht mehr gewährleistet ist.

Es wurde nun gefunden, daß man Glasoberflächen auch ohne diese und andere Nachteile beschichten kann, wenn man das Verfahren zum Beschichten von Glasoberflächen, insbesondere Glasflaschen, zur Verhinderung der Streuung von Glaspartikeln beim Bersten, mit einer transparenten, duroplastischen Schutzschicht von mehr als 50 µm durch Auftragen von isocyanatgruppenhaltigen, lösungsmittelfreien Beschichtungsmassen auf eine zunächst gereinigte, mit einer wässrigen oder alkoholischen Silanschlichte behandelte und getrocknete und anschließend auf 80-120 °C erwärmte Glasoberfläche oder sowie gegebenenfalls Aushärten des Überzugs bei erhöhter Temperatur so durchführt, daß man als isocyanatgruppenhaltige, lösungsmittelfreie Beschichtungsmasse eine solche verwendet, die aus Umsetzungsprodukten hydroxylgruppenhaltiger Polyester aus ω-Hydroxycarbonsäuren oder deren Lactonen mit mindestens 4 C-Atomen/Polyol-Gemischen mit einer Funktionalität von $\geqq$ 2 und aliphatischen und/oder cycloaliphatischen Diisocyanaten oder deren Gemischen mit einem NCO-Gehalt von 5-15 % sowie 2,4,6-Triamino-1,3,5-Triazin bestehen und wenn man die Beschichtung bei einer Temperatur von 180-260 °C aushärtet. Die isocyanatgruppenhaltige, lösungsmittelfreie Beschichtungsmasse stellt eine Quasi-Einkomponentenmasse dar.

Die applizierte Kunststoffschutzschicht ist hochelastisch, mit guter Einreißfestigkeit und guten Tieftemperatureigenschaften und zeigt eine ausgezeichnete Haftung, so daß beim Glasbruch oder dem Bersten beispielsweise von Flaschen die Glassplitter innerhalb der Schutzschicht verbleiben. Nach der Zerstörung der Glasflasche bleibt die Flaschenform vollständig erhalten. Die auftretende kinetische Energie wird durch Streckung und Erwärmung des Kunststoffüberzugs vernichtet.

Neben der Wetterstabilität der Überzüge ist von besonderem Vorteil die Beständigkeit der Beschichtung gegenüber heißen, alkalihaltigen Spüllaugen, in denen die Flaschen vor dem Abfüllen der Getränke gereinigt werden. Dieses trifft in besonderem Maße für Mehrwegflaschen zu, die vor jedem Füllvorgang einer intensiven Reinigung unterzogen werden.

Ein weiterer Vorteil der erfindungsgemäßen Beschichtung liegt darin, daß auch nach wiederholtem Spülen in heißer, alkalischer Waschlauge keine Verschlechterung der mechanischen Kenndaten und keinerlei Haftungsverlust auftreten. Die mit einem derartigen Kunststoffüberzug versehenen Glasflaschen können ohne Bedenken als Behälter für kohlensäurehaltige Getränke verwendet werden, da keine Gefahr beim Zubruchgehen oder Zerplatzen für den Menschen mehr auftreten kann.

Bei Verwendung als Mehrwegflasche ist die Gebrauchsdauer einer beschichteten Flasche wesentlich länger als die der unbeschichteten Flasche, die infolge der Bewegungsabläufe durch Gegeneinanderreiben, an scharfen Kanten und bei den Spülvorgängen in heißen Lösungen oberflächenmäßig stark beansprucht bzw. leicht beschädigt werden können.

Zur Durchführung dieses Verfahrens wird die gereinigte Glasflasche zunächst mit einer wässrigen oder alkoholischen Silanschlichte behandelt. Für die Behandlung werden Silane mit Resten verwendet, die zwei verschiedenen Funktionsgruppen zuzuordnen sind. Dieses sind zum einen niederen Alkoxyreste, insbesondere Methoxy- und Äthoxyreste, die mit den OH-Gruppen der Glasoberfläche reagieren und zum anderen organische Reste mit solchen funktionellen Gruppen, die mit den Isocyanatgruppen reagieren können, wie Aminogruppen, Epoxi-, Mercaptogruppen usw., z. B. γ-Aminopropyltrimethoxysilan, γ-Aminopropyltriäthoxysilan, Glycidyloxypropyltrimethoxysilan, Glycidyloxypropyltriäthoxysilan, γ-Mercaptopropyltrimethoxysilan, γ-Mercaptopropyltriäthoxysilan usw. Die Behandlung der Glasoberfläche bei der Glasflasche kann beispielsweise durch Tauchen oder Besprühen mit den Schlichtemitteln erfolgen. Die beispielsweise so behandelten Flaschen können entweder separat bei 25-100 °C getrocknet werden oder die Trocknung erfolgt durch die Wärme der Glasflasche (80-100 °C), d. h. bei einer Temperatur, wie sie bei der Flaschenherstellung im Laufe des Abkühlprozesses von Glasgegenständen auftritt.

Die Applikation der nachfolgend beschriebenen lösungsmittelfreien PUR-Quasi-Einkomponentenbeschichtungsmassen auf vorgewärmte Glasoberflächen erfolgt nach bekannten Verfahren, wie Gießen, Spritzen, Tauchen. Zu diesem Zweck wird die Beschichtungsmasse aus Viskositätsgründen auf 30-90 °C, vorzugsweise 50-70 °C vorgewärmt.

Nach der Applikation der Beschichtungsmaterialien kann die Wärmezufuhr bis zur vollständigen Aushärtung der Beschichtungsmasse fortgesetzt werden, wenn die vorhandene Wärmekapazität zur Härtung selbst nicht ausreicht. Die Härtung erfolgt dann bei einer Temperatur im Bereich von 180-260 °C, vorzugsweise 210-240 °C.

Zur Herstellung der Beschichtung eignen sich beispielsweise aliphatische und/oder cycloaliphatische Diisocyanate, wie sie beispielsweise in dem Artikel von W. Siefken in Justus Liebigs Annalen der Chemie 562, Seiten 75-136, beschrieben sind, wie Äthylendiisocyanat-1,2, Tetramethylendiisocyanat-1,4, Hexamethylendiisocyanat-1,6,2,2,4- bzw. 2,4,4-Trimethylhexamethylendiisocyanat-1,6 (TMDI), Dode-candiisocyanat-1,12, $\omega,\omega$-Diisocyanatodipropyläther, Lysindiisocyanat, Cyclobutan-1,3-diisocyanat, Cyclohexan-1,3 und -1,4-diisocyanat, 3-Isocyanatomethyl-3,5,5-trimethylcyclohexylisocyanat, welches auch als Isophorondiisocyanat bezeichnet und mit IPDI abgekürzt wird, Decahydro-8-methyl-(1,4-methanonaphtalen-2 (oder 3) 5-ylendimethylendiisocyanat, Hexahydro-4,7-methano-indan-1 (oder 2) 5 (oder 6) ylendimethylen-diisocyanat, Hexahydro-4,7-methanindan-1- (oder 2) 5 (oder 6) -ylendiisocyanat 3(4), 8(9)-Diisocyanatomethyltricyclo [5.2.1.0$^{2,6}$] decan (auch TCDI abgekürzt), Hexahydrotoluylendiiso-cyanat, Perhydro-2,4'- und/oder -4,4'-diphenylmethandiisocyanat, sowie beliebige Gemische der Isomeren. Weitere geeignete Isocyanate werden in dem genannten Artikel in den Annalen auf Seite 122 f beschrieben. Selbstverständlich können auch Mischungen der Isocyanate eingesetzt werden. Es eignen sich weiter die Umsetzungsprodukte dieser Diisocyanate mit Wasser im Molverhältnis von 2 : $\leqslant$ 1, insbesondere das in der DE-A-23 41 065 beschriebene. Bevorzugt für das beschriebene Beschichtungsverfahren werden die als IPDI und TCDI bezeichneten Diisocyanate eingesetzt. Als Ausgangsprodukte der lösungsmittelfreien Beschichtungsmasse eignen sich besonders Gemische trifunktioneller und bifunktio-neller, hydroxylgruppenhaltiger Polyester aus $\omega$-Hydroxycarbonsäuren oder deren Lactonen, wobei unter tri- bzw. bifunktionellen Polyestern solche mit 3 oder 2 OH-Gruppen verstanden werden. Die Hydroxycarbonsäure oder deren Lactone haben mindestens 4 C-Atome in der Kette. Bevorzugt werden solche mit 5-7 C-Atomen verwendet. Typische Beispiele für geeignete Lactone sind : $\gamma$-Butyrolacton, $\delta$-Valerolacton, $\varepsilon$-Caprolacton, Methyl-$\varepsilon$-caprolacton u. ä.

Die Herstellung dieser hydroxylgruppenhaltigen Produkte oder auch Lactonpolyesterpolyole kann in bekannter Weise nach einem in den US-Patentschriften 28 90 208, 29 77 885 oder 29 33 478 beschriebenen Verfahren erfolgen, in denen man niedermolekulare Triole oder Diole als Initiator mit den Lactonen unter Erhitzen mit oder ohne Katalysator umsetzt. Geeignete Triole sind beispielsweise Glycerin, Trimethylolpropan (TMP), Trimethyloläthan, Triäthanolamin u. ä. Beispiele für als Initiatoren geeignete Diole sind beispielsweise Äthylenglykol, Neopentylglykol, Propylenglykol-1,2 und 1,3, Butandiol-1,4 und -1,3, hexandiol-1,6, Diäthylenglykol, Triäthylenglykol oder die weiter unten genannten.

Anstelle der Lactone können auch den entsprechenden $\omega$-Hydroxycarbonsäuren und Diolen bzw. Triolen nach bekannten Verfahren die erfindungsgemäß einsetzbaren hydroxylgruppenhaltigen Polyester hergestellt werden.

Das mittlere Molekulargewicht der beim Verfahren gemäß der Erfindung einsetzbaren linearen Lactonpolyesterpolyole, insbesondere die Caprolactonpolyesterpolyole, sollte zwischen 400 und 1 500, vorzugsweise zwischen 500 und 900, liegen.

Die Caprolactonpolyester mit der Funktionalität = 3 sollten ein mittleres Molekulargewicht von 300-1 000, vorzugsweise 500-600 haben.

Als niedermolekulare, aliphatische und/oder cycloaliphatische Diole und Triole, die auch als zweite Polyolkomponente des Gemisches erfindungsgemäß einsetzbar sind, kommen solche mit einem Molekulargewicht von etwa 60 bis etwa 250 in Frage, z.B. Äthylenglykol, 1,2-Propylenglykol, 1,3-Propylenglykol, Butandiol-1,3, Butandiol-1,4, Pentandiol-1,5, 2- bzw. 3-Methylpentandiol-1,5, Hexandiol-1,6, 1,4-Cyclohexandiol, 1,4-Dimethylolcyclohexan, 2,4,4-(2,2,4)-Trimethylhexandiol-1,6, (TMH-diol), Diäthylenglykol, Triäthylenglykol, Tetraäthylenglykol, Pentaäthylenglykol, Glycerin, Trimethylolpropan (TMP), Trimethyloläthan, Triäthanolamin oder Gemische dieser Polyole.

Das mittlere Molekulargewicht der beim Verfahren gemäß der Erfindung verwendeten Polyolgemische, bestehend aus tri- und bifunktionellen, hydroxylgruppenhaltigen Polyesterpolyolen und niedrigmolekularen, aliphatischen Diolen oder Triolen, sollte zwischen 300 und 800 liegen, vorzugsweise zwischen 350 und 650. Die Funktionalität der eingesetzten, vorstehend beschriebenen Polyolgemische sollte zwischen > 2 und 3 liegen, vorzugsweise zwischen 2,4 und 2,9.

Die Umsetzung der linearen oder trifunktionellen Lactonpolyesterpolyole bzw. der linearen Lactonpolyesterpolyole in Kombination mit niedermolekularen, aliphatischen Diolen oder Triolen mit dem aliphatischen bzw. cycloaliphatischen Diisocyanat kann nach beliebigen an sich bekannten Methoden erfolgen, die beispielsweise in « High Polymers » Vol. XVI Polyurethane ; Chemistry and Technologie I, Chemistry von Saunders & Frisch (1962), herausgegeben in Interscience Publishers, beschrieben sind. Auf diese Weise werden Präpolymere in Form einer farblosen Flüssigkeit erhalten. deren NCO-Gehalt im Bereich von etwa 5 % bis etwa 15 % liegt.

Die Reaktion wird bei etwa 30 bis 100 °C für eine Dauer von 24 bis 3 Stunden unter praktisch wasserfreien Bedingungen durchgeführt. Gegebenenfalls kann die Reaktion in Gegenwart eines trockenen Inertgases wie Stickstoff, erfolgen.

Auch können für die Isocyanat-Polyadditionsreaktionen Katalysatoren, wie metallorganische Verbindungen (z. B. Zinnoctoat, Di-n-butylzinndilaurat) und tertiäre Amine (z. B. 1,4-Diazobicyclooctan [2.2.2]) und ihre Gemische, verwendet werden.

Zum Zwecke der Durchführung der Erfindung werden dann die Präpolymeren mit einer separat hergestellten Polyol/2,4,6-Triamino-1,3,5-triazin-Paste in einen zweiten Reaktionsschritt so umgesetzt, daß sich die Hydroxylgruppen des Polyols und die äquivalente Menge an Isocyanatgruppen des Präpolymeren in einer Vorreaktion umsetzen, während die reaktionsträgen NH$_2$-Gruppen des 2,4,6-Triamino-1,3,5-triazins erhalten bleiben. Die Reaktion erfolgt bei Temperaturen zwischen 50 und 100 °C, vorzugsweise zwischen 60 und 80 °C. In diesem Temperaturintervall reagieren die NH$_2$-Gruppen des 2,4,6-Triamino-1,3,5-triazins nicht oder nur in so geringem Umfang, so daß die Herstellung eines PUR-Quasi-Einkomponentenbeschichtungssystems mit einer Lagerstabilität von etwa 3 Monaten möglich ist. Das NCO-Gruppen zu NH$_2$-Gruppen-Verhältnis sollte im Bereich von 1 : 0,95-1 liegen. Das OH/NCO Gruppen-Verhältnis von 1 : 2,4 bis etwa 1 : 1,6, vorzugsweise von 1 : 2,2, bis etwa 1 : 1,8 wird bei der Umsetzung des Präpolymeren Polyol/Triazin-Paste eingesetzt. Aufgrund der geringen Reaktivität der NH$_2$-Gruppen des 2,4,6-Triamino-1,3,5-triazins bei den für die Isocyanat-Polyadditionsreaktionen üblichen Reaktionsbedingungen kann das PUR-Beschichtungsmaterial erfindungsgemäß in bekannter Weise auch in einem Einstufenprozeß (Beschreibung nachstehend) hergestellt werden.

Nach Beendigung der Umsetzung, die zweckmäßigerweise durch titrimetrische Bestimmung der NCO-Gruppen verfolgt wird, wird die PUR-Beschichtungsmasse so lange evakuiert bis keine Blasen mehr aufsteigen.

Gegenstand der Erfindung sind also spezielle Beschichtungsmassen für kohlensäurehaltige Getränkeflaschen, die aus der Hitze härtbaren, Lösungsmittelfreien Polyurethan-Quasi-Einkomponentenbeschichtungsmassen bestehen, die durch Umsetzung von Caprolactonpolyesterpolyolen und niedermolekularen, aliphatischen Diolen und/oder Triolen mit Diisocyanaten bzw. Diisocyanat-Harnstoffaddukten und zugemischtem 2,4,6-Triamino-1,3,5-triazin entweder in einem Zwei- oder Einstufenprozeß hergestellt werden können.

Zum Verbesserung der Verlaufeigenschaften der Überzüge werden bei der Zubereitung sogenannte Verlaufmittel zugesetzt. Bei diesen Mitteln kann es sich um chemische Verbindungen bzw. deren Gemische unterschiedlicher chemischer Art handeln, z. B. polymere oder monomere Verbindungen, z. B. Acetale, Äther, Mischpolymerisate aus n-Butylacrylat und Vinylisobutyläther, Siliconharze, fluorierte Alkylester etc. Derartige Verlaufmittel können den Formulierungen in Mengen von 0,05-0,5 Gew.-%, bezogen auf den Gesamtansatz, zugesetzt werden.

Auch andere gebräuchliche Verarbeitungszusätze von Beschichtungsmassen, wie in den Polyolen lösliche Farbstoffe, Stabilisatoren, Entschäumer etc., können zugesetzt werden. Die zugesetzten Mengen bezogen auf Bindemittel, können innerhalb eines weiten Bereichs schwanken. Die zugesetzte Menge richtet sich nach den Anforderungen an die Qualität der Überzüge.

Die Schichtdicken der ausgehärteten Überzüge können je nach Beanspruchung der Flaschen zwischen 50 und 250 μm schwanken.

Die in den nachstehenden Beispielen genannten mechanischen Kenndaten der PUR-Flaschenbeschichtungen wurden nach folgenden Methoden ermittelt :

Zugfestigkeit }
Dehnung } gemäß DIN 53 455
$\sigma_{100}$-Spannung }

Außerdem wurden Testfolien folgenden Stabilitätsprüfungen unterworfen :

Waschlaugentest : 4 Gew.-%ige NaOH + 0,4 Gew.-% Na-glyconat ein Zyklus : 30 Minuten/80 °C
Tropentest : 70 °C/100 % rel. LF (= relative Luftfeuchtigkeit)
Sterilisation : 121 °C/2h

Weiterhin wurden Haftung und Splitterschutz getestet. Der Splitterschutz wurde in einem sogenannten Falltest geprüft. Zu diesem Zweck wurde in eine beschichtete 0,7 l Getränkeflasche 6,3 g H$_2$SO$_4$ (98 %ig) und 9 g NaHCO$_3$ gegeben und verschlossen. Die entstehende CO$_2$-Menge erzeugt bei 25 °C einen Innendruck von ca. 494 kPa (4,0 atü). Die so vorbereitete Testflasche wurde aus einer Höhe von 1,2 m auf eine Betonplatte fallen gelassen und die Streuung der Glassplitter beobachtet.

Die erfindungsgemäßen Beschichtungsmassen werden durch die nachstehenden Beispiele illustriert.

Allgemeine Herstellungsvorschriften der Beschichtungsmassen

A. Zweistufenverfahren

1) Präpolymer

In erster Stufe wurden die Polyolgemische, bestehend aus bi- und trifunktionellen Caprolactonpolyesterpolyol oder TMP, mit der entsprechenden Menge Diisocyanat (IPDI oder TCDI) unter Anwesenheit genannter Katalysatoren innerhalb von 3-5 Stunden bei einer Reaktionstemperatur von 70-80 °C umgesetzt. Die Vollständigkeit der Umsetzung wurde titrimetrisch verfolgt. In dieser Stufe sollte das OH-/ NCO-Gruppen-Verhältnis im Bereich von 1 : 2,6-1,8, vorzugsweise 2,45-2,0 liegen.

2) Beschichtungsmasse

Das Präpolymer wurde anschließend mit der Polyol/2,4,6-Triamino-1,3,5-triazin-Paste, hergestellt aus dem entsprechenden Caprolactonpolyesterpolyol und dem gemahlenen 2,4,6-Triamino-1,3,5-triazin mit einer Korngröße < 50 μm, 1 Stunde bei 70 °C zur Reaktion gebracht. In dieser Stufe können auch die gleichen Katalysatoren der Präpolymerstufe eingesetzt werden.
Anschließend im Vakuum bis zur Blasenfreiheit entgast und titrimetrisch die Umsetzung kontrolliert.

B. Einstufenverfahren

1) Die Herstellung des Beschichtungsmaterials im Einstufenverfahren wurde so durchgeführt, daß das IPDI oder andere Diisocyanate, der Katalysator, Verlaufmittel und das 2,4,6-Triamino-1,3,5-triazin vorgelegt wurden und das Polyolgemisch (TMP/lineares Caprolactonpolyesterpolyol oder lineares und trifunktionelles Caprolactonpolyesterpolyol) zugetropft. Die Reaktionstemperatur betrug 70-80 °C, die Reaktionszeit 3-5 Stunden. Nach Beendigung der Umsetzung wurde das Endprodukt titrimetrisch kontrolliert und im Vakuum entgast.

2) Die Herstellung der Beschichtungsmasse kann also auch einstufig nach einem sogenannten Gesamtpräpolymerverfahren folgendermaßen durchgeführt werden :
In einem Reaktor wurden IPDI oder das Diisocyanat, Katalysator, Verlaufmittel, ggf. TMP vorgelegt und ggf. bei 70 °C zur Reaktion gebracht. Anschließend tropfte man die entsprechende Menge Polyolgemisch, bestehend aus linearen Caprolactonpolyesterpolyolen und ggf. in Kombination mit TMP oder bestehend aus linearen und trifunktionellen Caprolactonpolyesterpolyolen, unter $N_2$-atmosphäre zu. Die Reaktionstemperatur betrug 70-80 °C, die Reaktionszeit 3-5 Stunden. (Die vollständige Umsetzung wurde mittels titrimetrischer NCO-Bestimmung kontrolliert). Danach wurde unter Rühren das gemahlene 2,4,6-Triamino-1,3,5-triazin zugegeben und zur weiteren Homogenisierung durch ein Mischaggregat (Kolloidmühle, Farbtonprüfer etc.) geschickt.
Die ermittelten mechanischen Kenndaten der Folien entsprachen denen gemäß der Verfahren A und B 1 oder B 2 hergestellten Folien.

Beschreibung der in den Beispielen verwendeten Ausgangssubstanzen

A. Polyolkomponenten

Es wurden lineare Polycaprolactone, hergestellt durch Umsetzung von ε-Caprolacton mit Diäthylenglykol nach dem Verfahren der US-A-28 90 208, eingesetzt, und zwar

1) das Caprolactonpolyesterpolyol mit der Hydroxylzahl von 212 mg KOH/g einer Säurezahl von 0,3 mg KOH/g und einem mittleren Molekulargewicht von 530

2) das Caprolactonpolyesterpolyol mit einer Hydroxylzahl von 135 mg KOH/g einer Säurezahl von 0,3 mg KOH/g und einem mittleren Molekulargewicht von 830

3) das trifunktionelle Caprolactonpolyesterpolyol, hergestellt durch Umsetzung von ε-Caprolacton mit Trimethylolpropan (TMP) mit einer Hydroxylzahl von 310 mg KOH/g einer Säurezahl von 0,3 mg KOH/g und einem mittleren Molekulargewicht von 540.

Tabelle 1 zeigt einige Beispiele mit Kenndaten der PUR-Quasi-Einkomponentensysteme bestehend aus einem Gemisch der linearen Caprolactonpolyesterpolyole, TMP und 2,4,6-Triamino-1,3,5-triazin sowie IPDI. Als Verlaufmittel wird bei den nachstehenden Beispielen ein Handelsprodukt verwendet, das chemisch gesehen ein Copolymerisat aus n-Butylacrylat und 2-Äthylhexylacrylat ist.

## 0 025 994

Tabelle 1

| Beispiele | | 1 | 2 | 3 | 4 | 5 |
|---|---|---|---|---|---|---|
| Präpolymer OH/NCO = 1 : X ; X = | | 2,42 | 2,42 | 2,2 | 2 | — |
| Polyol A 1 | | 28,56 | 31,73 | 33,73 | 34,43 | 33,85 |
| Polyol A 2 | | 450,27 | 500,52 | 522,01 | 543,11 | 533,96 |
| Trimethylolpropan | | 28,64 | 15,92 | 16,6 | 17,27 | 15,26 |
| Di-n-butylzinndilaurat | | 0,1 | 0,1 | 0,1 | 0,1 | 0,5 |
| IPDI | | 492,43 | 451,73 | 428,22 | 405,09 | 357,92 |
| NCO-Äquivalent- | theor. | 384 | 419 | 476 | 549 | |
| Gewicht | prakt. | 395 | 420 | 517 | 582 | |
| Viskosität bei 60 °C (in Pa · s) | | 250 | 145 | 390 | 402 | |
| 50 °C (in Pa · s) | | 544 | 286 | 840 | 864 | |
| 40 °C (in Pa · s) | | 1 240 | 605 | 2 100 | 2 055 | |
| 30 °C (in Pa · s) | | 3 400 | 1 570 | 5 250 | 5 320 | |
| 20 °C (in Pa · s) | | 10 170 | 4 350 | 16 000 | 16 100 | |
| 2,4,6-Triamino-1,3,5-triazin/Polyol-Paste | | | | | | |
| Polyol A 1 | | 29,81 | 29,81 | 29,81 | 29,81 | |
| Polyol A 2 | | 470,19 | 470,19 | 170,19 | 170,19 | |
| 2,4,6-Triamino-1,3,5-triazin | | 500 | 500 | 500 | 500 | 57,51 |
| Beschichtungsmasse OH/NCO = 1 : X ; X = | | 2,18 | 2,15 | 2 | 1,85 | 1,85 |
| Präpolymer | | 845,51 | 853,29 | 877,23 | 889,29 | |
| 2,4,6-Triamino-1,3,5-triazin/Polyol-Paste | | 152,99 | 145,21 | 121,27 | 109,21 | |
| Di-n-butylzinndilaurat | | 0,5 | 0,5 | 0,5 | 0,5 | |
| Verlaufmittel | | 1,0 | 1,0 | 1,0 | 1,0 | 1,0 |
| NCO-Äquivalent- | theor. | 513 | 540 | 647 | 718 | 790 |
| Gewicht | prakt. | 794 | 844 | 937 | 808 | 795 |
| Viskosität bei 60 °C (in Pa · s) | | 408 | 228 | 745 | 785 | 756 |
| 50 °C (in Pa · s) | | 900 | 440 | 1 660 | 1 820 | 1 780 |
| 40 °C (in Pa · s) | | 2 040 | 992 | 3 820 | 4 250 | 4 100 |
| 30 °C (in Pa · s) | | 5 320 | 2 560 | 10 700 | 10 920 | 10 750 |
| 20 °C (in Pa · s) | | 185 000 | 74 500 | 346 800 | 362 000 | 341 000 |
| Mechanische Kenndaten | | | | | | |
| Zugfestigkeit | $N/mm^2$ | 38,5 | 28,1 | 32,5 | 44,4 | 43,6 |
| Dehnung | % | 30 | 200 | 210 | 240 | 230 |
| $\sigma_{100}$-Spannung | $N/mm^2$ | 17,1 | 15,4 | 12,8 | 16,1 | 15,8 |

Die PUR-Quasi-Einkomponentenbeschichtungsmassen in den Beispielen 1-4 wurden nach dem beschriebenen Zweistufenprozeß hergestellt, während die Beschichtungsmasse gemäß Beispiel 5 nach dem Einstufenprozeß B 1 oder B 2 (gleiche Ergebnisse) gefertigt wurde.

Die Ergebnisse der Stabilitätsprüfungen — Waschlauge-, Tropen-, Sterilisationstest — sind in Tabelle 3 zusammengefaßt. Die Haftung der Beschichtungsmassen auf vorbehandelten Glasflaschen und -platten (auch nach 5 Zyklen Waschlaugen-test) war ausgezeichnet. Der Splitterschutz war in den Rezepturen mit einer Dehnung von > 150 % gewährleistet. Je geringer die Dehnung der Folien (siehe auch Vergleichsbeispiele C1 und C3), desto geringer ist auch der Splitterschutz, d. h. die Splitter der berstenden Glasflaschen sind bis in einen Umkreis > 2 m zu finden. Die gleiche Beobachtung wurde gemacht, wenn die Dehnung zwar > 150 % ist, jedoch die Zugfestigkeit < 28 N/mm² betrug.

Tabelle 2 zeigt einige Beispiele mit Kenndaten der PUR-Quasi-Einkomponentensysteme bestehend aus linearen und trifunktionellen Caprolactonpolyesterpolyol, 2,4,6-Triamino-1,3,5-triazin und IPDI. Das trifunktionelle Caprolactonpolyesterpolyol nimmt hierbei die gleiche Funktion ein, wie das niedere Polyol der Beispiele 1-5.

Tabelle 2

| Beispiele | | 6 | 7 | 8 | 9 | 10 | 11 | 12 |
|---|---|---|---|---|---|---|---|---|
| Präpolymer OH/NCO = 1 : X ; X = | | 2,42 | 2,42 | 2,42 | 2,42 | 2,2 | 2 | |
| Polyol A 3 | | 195,66 | 115,74 | 115,74 | 115,74 | 120,70 | 125,59 | 110,97 |
| Polyol A 2 | | 311,75 | 432,43 | 432,43 | 432,43 | 450,95 | 469,22 | 468,67 |
| Di-n-butylzinndilaurat | | 0,1 | 0,1 | 0,1 | 0,1 | 0,1 | 0,1 | 0,5 |
| IPDI | | 492,49 | 451,73 | 451,73 | 451,73 | 428,25 | 405,09 | 357,92 |
| NCO-Äquivalent- | theor. | 384 | 419 | 419 | 419 | 476 | 549 | |
| Gewicht | prakt. | 385 | 455 | 426 | 463 | 487 | 590 | |
| Viskosität bei 60 °C (in Pa · s) | | 336 | 201 | 129 | 209 | 645 | 740 | |
| 50 °C (in Pa · s) | | 774 | 289 | 268 | 298 | 780 | 1 590 | |
| 40 °C (in Pa · s) | | 1 955 | 625 | 552 | 634 | 1 970 | 3 840 | |
| 30 °C (in Pa · s) | | 5 440 | 1 270 | 1 230 | 1 340 | 3 560 | 11 200 | |
| 20 °C (in Pa · s) | | 15 500 | 3 610 | 3 160 | 3 770 | 10 500 | 35 400 | |
| 2,4,6-Triamino-1,3,5-triazin/Polyol-Paste | | | | | | | | |
| Polyol A 1 | | 29,81 | — | — | 29,81 | 29,81 | 29,81 | 3,43 |
| Polyol A 2 | | 470,19 | 457,14 | 486,9 | 470,19 | 470,19 | 470,19 | |
| Polyol A 3 | | — | 42,86 | 13,1 | — | — | — | |
| 2,4,6-Triamino-1,3,5-triazin | | 500 | 500 | 500 | 500 | 500 | 57,51 | |
| Beschichtungsmasse | | | | | | | | |
| OH/NCO = 1: X ;  X = | | 2,17 | 2,15 | 2,15 | 2,17 | 1,99 | 1,85 | 1,85 |
| Präpolymer | | 854,47 | 863,76 | 855,05 | 864,98 | 870,71 | 890,61 | |
| 2,4,6-Triamino-1,3,5-triazin/ Polyol-Paste | | 144,03 | 134,74 | 143,45 | 133,52 | 127,79 | 107,89 | |
| Di-n-butylzinndilaurat | | 0,5 | 0,5 | 0,5 | 0,5 | 0,5 | 0,5 | |
| Verlaufmittel | | 1,0 | 1,0 | 1,0 | 1,0 | 1,0 | 1,0 | 1,0 |
| NCO-Äquivalent- | theor. | 544 | 582 | 547 | 588 | 614 | 727 | 681 |
| Gewicht | prakt. | 790 | 816 | 825 | 824 | 853 | 1 067 | 754 |
| Viskosität bei 60 °C (in Pa · s) | | 1 050 | 630 | 440 | 690 | 840 | 1 548 | 1 525 |
| 50 °C (in Pa · s) | | 2 385 | 1 420 | 924 | 1 470 | 1 970 | 3 600 | 3 490 |
| 40 °C (in Pa · s) | | 5 400 | 3 240 | 2 190 | 3 360 | 4 030 | 8 900 | 8 760 |
| 30 °C (in Pa · s) | | 18 600 | 8 990 | 5 360 | 9 150 | 15 500 | 26 550 | 26 200 |
| 20 °C (in Pa · s) | | 71 600 | 32 300 | 18 400 | 32 600 | 62 000 | 91 200 | 89 500 |
| Mechanische Kenndaten | | | | | | | | |
| Zugfestigkeit | N/mm² | 40,1 | 41,4 | 37,3 | 35,6 | 39,5 | 43,1 | 43,7 |
| Dehnung | % | 15 | 140 | 170 | 185 | 195 | 210 | 215 |
| $\sigma_{100}$-Spannung | N/mm² | 18,4 | 17,3 | 16,1 | 15,9 | 16,3 | 18,5 | 18,6 |

Die PUR-Quasi-Einkomponentenbeschichtungsmassen wurden in den Beispielen 6-11 nach dem Zweistufenverfahren hergestellt, während die Beschichtungsmasse gemäß Beispiel 12 wieder nach dem Einstufenprozeß B 1 oder B 2 (gleiche Ergebnisse) hergestellt wurde.

Die Ergebnisse der Stabilitätsprüfungen — Waschlauge-, Tropen-, Sterilisationstest — sind in Tabelle 3 zusammengefaßt. Die Haftung der Beschichtungsmassen auf vorbehandelten Glasflaschen und -platten (auch nach 5 Zyklen Waschlaugentest) war ausgezeichnet. Der Splitterschutz war in den Rezepturen mit einer Dehnung von > 150 % gewährleistet. Je geringer die Dehnung der Folie (siehe auch Vergleichsbeispiele), desto geringer ist der Splitterschutz, d. h. die Splitter der berstenden Glasflaschen sind bis in einen Umkreis von > 2 m zu finden. Die gleiche Beobachtung wurde gemacht, wenn die Dehnung zwar > 150 % ist, jedoch die Zugfestigkeit < 28 N/mm² betrug.

Tabelle 3 zeigt die Waschlaugen-, Tropen- und Sterilisationsbeständigkeit ausgewählter Beispiele aus den Tabellen 1 und 2.

7

Tabelle 4  zeigt zwei Beispiele unter Verwendung von TCDI.

## Tabelle 3

| Beispiele aus Tab. 1 u. 2 | | | | 3 | 4 | 8 | 9 | 10 | 11 | 14 |
|---|---|---|---|---|---|---|---|---|---|---|
| **Waschlaugentest** | | | | | | | | | | |
| vor dem Test | Zugfestigkeit | $\sigma_B$ | N/mm² | 33,1 | 45,1 | 35,6 | 37,1 | 40,1 | 42,5 | 32,1 |
| | Dehnung | $\varepsilon_B$ | % | 200 | 250 | 190 | 180 | 190 | 220 | 185 |
| | $\sigma_{100}$-Spannung | $\sigma_{100}$ | N/mm² | 12,1 | 15,8 | 15,5 | 17,3 | 16,9 | 18,5 | 15,8 |
| nach dem Test | $\sigma_B$ n. 5. Zyklus | | N/mm² | 30,6 | 41,3 | 28,7 | 35,4 | 38,7 | 41 | 39 |
| | $\sigma_B$ u. n. 24 h bei Raumtemperatur | | | 29,9 | 38 | 28,1 | 33,1 | 17,1 | 35,8 | 31,3 |
| | $\varepsilon_B$ n. 5. Zyklus | | % | 210 | 260 | 200 | 200 | 205 | 230 | 210 |
| | $\varepsilon_B$ u. n. 24 h bei Raumtemperatur | | | 190 | 240 | 180 | 170 | 185 | 200 | 190 |
| | $\sigma_{100}$ n. 5. Zyklus | | N/mm² | 10,9 | 11,9 | 11,4 | 15,2 | 16,1 | 17 | 14,1 |
| | $\sigma_{100}$ u. n. 24 h bei Raumtemperatur | | | 10,1 | 11,7 | 13,8 | 16,9 | 16,4 | 15,5 | 15 |
| **Tropentest** | | | | | | | | | | |
| vor dem Test | Zugfestigkeit | $\sigma_B$ | N/mm² | 31,9 | 43,4 | 36,1 | 38,3 | 38,7 | 41,9 | 33 |
| | Dehnung | $\varepsilon_B$ | % | 210 | 260 | 210 | 180 | 200 | 200 | 190 |
| | $\sigma_{100}$-Spannung | $\sigma_{100}$ | N/mm² | 11,9 | 14,7 | 16,7 | 21,9 | 16,1 | 18,9 | 16,1 |
| | $\sigma_B$ n. 1. d + 24 h bei RT | | N/mm² | 30,6 | 42,7 | 35,2 | 38,1 | 37,9 | 42,6 | 32,9 |
| | $\varepsilon_B$ n. 1. d + 24 h bei RT | | % | 225 | 250 | 220 | 200 | 210 | 220 | 200 |
| | $\sigma_{100}$ n. 1. d + 24 h bei RT | | N/mm² | 11,8 | 14,3 | 16,5 | 22,4 | 15,4 | 17,5 | 15,7 |
| nach dem Test | $\sigma_B$ n. 7. d + 24 h bei RT | | N/mm² | 29,2 | 40,7 | 33,4 | 36,5 | 36,1 | 40,9 | 31,7 |
| | $\varepsilon_B$ n. 7. d + 24 h bei RT | | % | 240 | 280 | 225 | 190 | 215 | 210 | 230 |
| | $\sigma_{100}$ n. 7. d + 24 h bei RT | | N/mm² | 10,7 | 13,2 | 15,3 | 21,7 | 15,2 | 15,6 | 15,1 |
| | $\sigma_B$ n. 14. d + 24 h bei RT | | N/mm² | 27,5 | 38,5 | 31,2 | 32,5 | 33,9 | 35,8 | 29,8 |
| | $\varepsilon_B$ n. 14. d + 24 h bei RT | | % | 250 | 280 | 230 | 210 | 235 | 220 | 240 |
| | $\sigma_{100}$ n. 14. d + 24 h bei RT | | N/mm² | 9,9 | 11,1 | 14,1 | 20,6 | 13,9 | 14,2 | 8,8 |
| Sterilisation Gewichtszunahme | | | % | 2,5 | 2,4 | 2,7 | 1,8 | 1,7 | 1,4 | 1,9 |

Die Stabilitätsprüfungen wurden ebenfalls mit den Beispielen 5 und 12 durchgeführt. Die Ergebnisse entsprachen weitgehendst den Beispielen 4 und 11.

## Tabelle 4

| Beispiele | 13 | 14 |
|---|---|---|
| Präpolymer  OH/NCO = 1 : X ;  X = | 2,42 | 2,42 |
| Polyol gemäß A 1 | 30,09 | — |
| Polyol gemäß A 2 | 474,48 | 409,92 |
| Polyol gemäß A 3 | — | 109,72 |
| Trimethylolpropan | 15,09 | — |
| Di-n-butylzinndilaurat | 0,1 | 0,1 |
| TCDI | 480,24 | 480,26 |

Tabelle 4 (Fortsetzung)

| Beispiele | | 13 | 14 |
|---|---|---|---|
| NCO-Äquivalent- | theor. | 442 | 442 |
| Gewicht | gef. | 476 | 479 |
| Viskosität bei 60 °C (in Pa · s) | | 315 | 385 |
| 50 °C (in Pa · s) | | 700 | 810 |
| 40 °C (in Pa · s) | | 1 530 | 1 755 |
| 30 °C (in Pa · s) | | 2 960 | 3 160 |
| 20 °C (in Pa · s) | | 6 500 | 7 800 |
| 2,4,6-Triamino-1,3,5-Triazin/Polyol-Paste | | | |
| Polyol gemäß A 1 | | 29,81 | 29,81 |
| Polyol gemäß A 2 | | 470,19 | 470,19 |
| 2,4,6-Triamino-1,3,5,-triazin | | 500 | 500 |
| Beschichtungsmasse    OH/NCO = 1 : X ;   X = | | 2,17 | 2,17 |
| Präpolymer | | 868,15 | 868,86 |
| 2,4,6-Triamino-1,3,5-triazin/ Polyol-Paste | | 130,35 | 129,64 |
| Di-n-butylzinndilaurat | | 0,5 | 0,5 |
| Verlaufmittel | | 1,0 | 1,0 |
| NCO-Äquivalent- | theor. | 602 | 602 |
| Gewicht | gef. | 789 | 862 |
| Viskosität bei 60 °C (in Pa · s) | | 675 | 750 |
| 50 °C (in Pa · s) | | 1 148 | 1 346 |
| 40 °C (in Pa · s) | | 2 650 | 3 005 |
| 30 °C (in Pa · s) | | 9 400 · | 10 500 |
| 20 °C (in Pa · s) | | 15 500 | 17 160 |
| Mechanische Kenndaten | | | |
| Zugfestigkeit (N/mm$^2$) | | 28,5 | 31,8 |
| Dehnung (%) | | 195 | 180 |
| $\sigma_{100}$-Spannung (N/mm$^2$) | | 15,3 | 16,1 |

Vergleichsbeispiel C 1

Die Zubereitung der Massen zu $C_1$-$C_3$ erfolgte nach dem vorher beschriebenen Zweistufenverfahren.

Präpolymer OH/NCO = 1 : 2,42

214,8 g Polytetramethylenätherglykol (OH-Zahl : 110,5 mg KOH/g)
184,2 g Polytetramethylenätherglykol (OH-Zahl : 173,5 mg KOH/g)
 47,7 g Trimethylolpropan
  0,1 g Di-n-butylzinndilaurat
553,3 g IPDI

NCO-Äquivalent-Gewicht : theor. : 342 gef. : 360

2,4,6-Triamino-1,3,5-triazin/Polyol-Paste

269,1 g Polytetramethylenätherglykol (OH-Z. : 110,5 mg KOH/g)
230,1 g Polytetramethylenätherglykol (OH-Z. : 173,5 mg KOH/g)
800 g 2,4,6-Triamino-1,3,5-triazin

Beschichtungsmasse

834,4 g Präpolymer
165,6 g 2,4,6-Triamino-1,3,5-triazin/Polyol-Paste
  0,5 g Di-n-butylzinndilaurat (DBTL)
  0,5 g Verlaufmittel

Mechanische Kenndaten

Zugfestigkeit     $\sigma_B$   :  35,1 N/mm²
Dehnung           $\varepsilon_B$   :  30 %
$\sigma_{100}$-Spannung  $\sigma_{100}$  :  23,1 N/mm²

Aufgrund der geringen Dehnung war kein Splitterschutz gewährleistet. Im Falltest hielt der Schutzüberzug die berstende Glasflasche nicht zusammen.
Die Splitter konnten im weiten Umkreis gefunden werden.

Vergleichsbeispiel C 2

Präpolymer OH/NCO = 1 : 2,42

221,12 g Polytetramethylenätherglykol (OH-Z. : 173,5 mg KOH/g)
257,76 g Polytetramethylenätherglykol (OH-Z. : 110,5 mg KOH/g)
 28,65 g TMP
  0,1  g DBTL
492,47 g IPDI

NCO-Äquivalent-Gewicht : theor. 384 prakt. 438

2,4,6-Triamino-1,3,5-triazin/Polyol-Paste

230,9 g Polytetramethylenätherglykol (OH-Z. : 173,5 mg KOH/g)
269,1 g Polytetramethylenätherglykol (OH-Z. : 110,5 mg KOH/g)
500   g 2,4,6-Triamino-1,3,5-triazin

Beschichtungsmasse

859,7 g Präpolymer
140,3 g 2,4,6-Triamino-1,3,5-triazin/Polyol-Paste
  0,5 g DBTL
  0,5 g Verlaufmittel

Mechanische Kenndaten

Zugfestigkeit     $\sigma_B$   :  34,5 N/mm²
Dehnung           $\varepsilon_B$   :  200 %
$\sigma_{100}$-Spannung  $\sigma_{100}$  :   21,1 N/mm²

Im Falltest wurden keine streuenden Glassplitter beobachtet. Die Folien zeigten jedoch nach dem Härtungsprozeß eine deutliche Gelbfärbung und bereits nach 350 h Kurzbewitterung im Xenotest trat Versprödung auf und nach insgesamt 600 h die Zerstörung der Folie. Auch bei Verwendung von Oxidationsstabilisatoren konnte keine wesentliche Verbesserung erzielt werden.

Vergleichsbeispiel C3

Präpolymer

478,35 g Polyätherpolyol (OH-Z. : 139,5 mg KOH/g)
 28,76 g TMP
  0,1  g DBTL
492,79 g IPDI
NCO-Äquivalent-Gewicht : theor : 384 prakt. : 397

2,4,6-Triamino-1,3,5-triazin/Polyol-Paste

**0 025 994**

500 g Polyätherpolyol (OH-Z. : 139,5 mg KOH/g)
500 g 2,4,6-Triamino-1,3,5-triazin

Beschichtungsmasse

846,17 g Präpolymer
152,33 g 2,4,6-Triamino-1,3,5-triazin/Polyol-Paste
  0,5  g DBTL
  1,0  g Verlaufmittel

Mit dieser PUR-Beschichtungsmasse konnten aufgrund hoher Sprödigkeit keine Meßfolien hergestellt werden, so daß auch keine Fallteste mit beschichteten Glasflaschen durchgeführt wurden.

**Ansprüche**

1. Verfahren zum Beschichten von Glasoberflächen, insbesondere Glasflaschen, zur Verhinderung der Streuung von Glaspartikeln beim Bersten, mit einer transparenten, duroplastischen Schutzschicht von mehr als 50 μm durch Auftragen von isocyanatgruppenhaltigen, lösungsmittelfreien Beschichtungsmassen auf eine zunächst gereinigte, mit einer wässrigen oder alkoholischen Silanschlichte behandelte und getrocknete und anschließend auf 80-120 °C erwärmte Glasoberfläche sowie gegebenenfalls Aushärten des Überzugs bei erhöhter Temperatur, dadurch gekennzeichnet, daß man als isocyanatgruppenhaltige, lösungsmittelfreie Beschichtungsmasse eine solche verwendet, die aus Umsetzungsprodukten hydroxylgruppenhaltiger Polyester aus ω-Hydroxycarbonsäuren oder deren Lactonen mit mindestens 4 C-Atomen/Polyol-Gemischen mit einer Funktionalität von $\geq$ 2 und aliphatischen und/oder cycloaliphatischen Diisocyanaten, oder deren Gemischen mit einem NCO-Gehalt von 5-15 % oder Diisocyanat-Harnstoffaddukten sowie 2,4,6-Triamino-1,3,5-triazin bestehen und daß man die Beschichtung bei einer Temperatur von 180-260 °C aushärtet.

2. Verfahren nach Anspruch 1, dadurch gekennzeichnet, daß als Diisocyanat 3-Isocyanatomethyl-3,5,5-trimethylcyclohexylisocyanat, 3(4),8(9)-Diisocyanatomethyltricyclo-[5.2.1.0$^{2,6}$] decan oder 2,2,4-(2,4,4)-Trimethylhexamethylendiisocyanat eingesetzt werden.

3. Verfahren nach den Ansprüchen 1 und 2, dadurch gekennzeichnet, daß das Verfahren zur Herstellung der Beschichtungsmasse einstufig durchgeführt wird, wobei das 2,4,6-Triamino-1,3,5-triazin zusammen mit dem Diisocyanat in den Reaktor vorgelegt wird.

4. Verfahren nach den Ansprüchen 1 und 2, dadurch gekennzeichnet, daß das Verfahren zur Herstellung der Beschichtungsmasse einstufig durchgeführt wird, wobei das 2,4,6-Triamino-1,3,5-triazin erst nach der Umsetzung des Diisocyanats mit den Polyolen zugefügt und das Reaktionsprodukt gegebenenfalls durch ein Mischaggregat geführt wird.

**Claims**

1. Process for coating glass surfaces, especially glass bottles, to prevent the scattering of glass particles on bursting, with a transparent, thermoset plastic protective layer of more than 50 μm thickness, by applying solvent-free coating compositions, containing isocyanate groups, onto a glass surface which has first been cleaned, treated with an aqueous or alcoholic silane size, dried and subsequently warmed to 80-120 °C, and if appropriate, curing the coating at an elevated temperature, characterised in that the solvent-free coating composition containing isocyanate groups which is employed consists of reaction products of mixtures of polyesters, containing hydroxyl groups, obtained from ω-hydroxycarboxylic acids or their lactones, having not less than 4 C atoms and polyols, having a functionality of $\geq$ 2, and aliphatic and/or cycloaliphatic diisocyanates, or mixtures of these, having an NCO content of 5-15 %, or diisocyanate-urea-adducts, as well as 2,4,6-triamino-1,3,5-triazine, and that the coating is cured at a temperature of 180-260 °C.

2. Process according to Claim 1, characterised in that the diisocyanate employed is 3-isocyanatomethyl-3,5,5-trimethylcyclohexyl isocyanate 3(4), 8(9)-diisocyanatomethyltricyclo [5.2.1.0$^{2,6}$] decane or 2,2,4-(2,4,4)-trimethylhexamethylene diisocyanate.

3. Process according to Claims 1 and 2, characterised in that the process for the preparation of the coating composition is carried out in a single step, the 2,4,6-triamino-1,3,5-triazine being initially introduced into the reactor together withf the diisocyanate.

4. Process according to Claims 1 and 2, characterised in that the process for the preparation of the coating composition is carried out in a single step, the 2,4,6-triamino-1,3,5-triazine being added only after the reaction of the diisocyanate with the polyols, and the reaction product being passed through a mixing apparatus, if appropriate.

11

# 0 025 994

**Revendications**

1. Procédé de revêtement de surfaces de verre, en particulier de bouteilles de verre pour éviter la dispersion de particules de verre en cas de bris, avec une couche de protection transparente, thermodurcissable de plus de 50 μ, par application de masses de revêtement exemptes de solvant, contenant des groupes isocyanate, sur une surface de verre préalablement nettoyée, traitée par application de silane aqueuse ou alcoolique, et séchée, puis chauffée à 80-120 °C, ainsi qu'éventuellement, durcissement du revêtement à une température élevée, procédé caractérisé en ce que comme masse de revêtement exempte de solvant, contenant des groupes isocyanate, on utilise une masse constituée par les produits de réaction de mélanges formés de polyesters, contenant des groupes hydroxyle, dérivés d'acides ω-hydroxycarboxyliques, ou de leurs lactones à au moins 4 atomes de carbone, et de polyols, ces mélanges ayant un nombre de fonctions $\geq 2$, avec des diisocyanates aliphatiques et/ou cycloaliphatiques ou leurs mélanges, avec une teneur en NCO de 5-15 %, ou des produits d'addition diisocyanate-urée, ainsi qu'avec la 2,4,6-triamino-1,3,5-triazine, et que l'on fait durcir le revêtement à une température de 180-260 °C.

2. Procédé selon la revendication 1, caractérisé en ce que comme diisocyanate, on utilise les 3-Isocyanatométhyl-3,5,5-triméthylcyclohexylisocyanate, 3(4), 8-(9)-Diisicyanatométhyl-tricyclo-[5.2.1.0$^{2.6}$] décane ou le 2,2,4-(2,4,4)-Triméthylhexaméthylènediisocyanate.

3. Procédé selon l'une des revendications 1 et 2, caractérisé en ce que le procédé pour la production de la masse de revêtement est réalisé en une étape, la 2,4,6-triamino-1,3,5-triazine étant disposée dans le réacteur en commun avec le diisocyanate.

4. Procédé selon l'une des revendications 1 et 2, caractérisé en ce que le procédé pour la production de la masse de revêtement est réalisé en une étape, la 2,4,6-triamino-1,3,5-triazine n'étant introduite qu'après la réaction du diisocyanate avec le polyol, et que le produit réactionnel est éventuellement traité dans un appareil mélangeur.